# EUROPÄISCHE PATENTSCHRIFT

(11) **EP 4 397 173 B1**
(45) Veröffentlichungstag und Bekanntmachung des Hinweises auf die Patenterteilung: **14.05.2025**
(21) Anmeldenummer: 23218507.4
(22) Anmeldetag: 20.12.2023
(51) Int. Cl.: A01G 13/02

(54) **SCHUTZSYSTEM FÜR DEN PHYSISCHEN SCHUTZ VON PFLANZEN MIT MEHREREN, EINE DREHWELLE ABSTÜTZENDEN AUSLEGERVORRICHTUNGEN, NACHRÜSTSET MIT AUSLEGERVORRICHTUNGEN FÜR EIN BESTEHENDES SCHUTZSYSTEM**
PROTECTION SYSTEM FOR THE PHYSICAL PROTECTION OF PLANTS WITH SEVERAL ROTATING SHAFT SUPPORTING CANTILEVERS, RETROFIT KIT WITH CANTILEVERS FOR AN EXISTING SHELTER
SYSTÈME DE PROTECTION PHYSIQUE DE PLANTES AVEC PLUSIEURS DISPOSITIFS DE FLÈCHE SUPPORTANT UN ARBRE ROTATIF, KIT DE RÉÉQUIPEMENT AVEC DISPOSITIFS DE FLÈCHE POUR UN SYSTÈME DE PROTECTION EXISTANT

(30) Priorität: 04.01.2023 DE 102023100152
(43) Veröffentlichungstag der Anmeldung: 10.07.2024
(73) Patentinhaber: NetIT-Services GmbH, 8600 Dübendorf (CH)
(72) Erfinder: SPISSU, Stefan, 8600 Dübendorf (CH); STOCKER, Frank, 8600 Dübendorf (CH); HELLWIG, Wolfgang, 8600 Dübendorf (CH); WEIS, Bertram, 79238 Ehrenkirchen (DE); WAGNER, Kurt, 79238 Ehrenkirchen (DE)
(74) Vertreter: Müller Hoffmann & Partner

(56) Entgegenhaltungen:
- EP-A1- 1 203 526
- EP-A1- 2 269 442
- MD-Y- 1 634
- MD-Z- 1 634
- FRANCE 3 NOUVELLE-AQUITAINE: "Vinitech: le viti-tunnel prix spécial de l innovation", 2 December 2022 (2022-12-02), XP093142714, Retrieved from the Internet <URL:https://www.youtube.com/watch?v=ujzFX70dLmA&ab_channel=Brut> [retrieved on 20240319]

## Beschreibung

Die Erfindung betrifft ein Schutzsystem für den physischen Schutz von Pflanzen, insbesondere von mehreren in einer Reihe angeordneten Pflanzen, und deren Blüten oder/und Fruchtstände mit wenigstens einem Schutznetz; wenigstens einer Drehwelle; wobei das Schutznetz mit einem ersten (unteren) Netzrandbereich, insbesondere ersten (unteren) Netzkante, an der Drehwelle befestigt ist und mit einem zweiten (oberen) Netzrandbereich, insbesondere zweiten (oberen) Netzkante, an einem Trägerelement befestigt ist, das in einem oberen Bereich oder oberhalb der Pflanzen angeordnet und mit wenigstens einer pfahlartigen Stütze verbunden ist, derart, dass das Schutznetz bedarfsweise von oben nach unten von der Drehwelle abrollbar oder von unten nach oben auf die Drehwelle aufrollbar ist.

Ein derartiges Schutzsystem ist beispielweise aus der DE 10 2006 028 273 A1 bekannt. Ferner offenbart auch die EP 2 269 442 A2 ein solches Schutzsystem. Ergänzend wird noch auf die MD 1 634 Y und die EP 1 203 526 A1 hingewiesen.

Ein weiteres Schutzsystem ist in folgendem Internet-Video gezeigt: France 3 Nouvelle-Aquitaine: "Vinitech: le viti-tunnel prix spécial de I innovation", 1 . Dezember 2022 (2022-12-01), XP093142714, https://www.youtube.com/watch?v=ujzFX70dLmA&ab_channel=Brut

Derartige Schutzsysteme dienen insbesondere dem Schutz von Pflanzen, die in Reihen angeordnet sind, wie beispielweise Reben, Obstbäumen und dergleichen. Die eingesetzten Schutznetze dienen dabei insbesondere dazu, die Pflanzen vor Witterungseinflüssen zu schützen, wie beispielsweise Starkregen oder Hagelschlag. Die Schutznetze sind aber auch dazu geeignet, die Pflanzen vor Wildverbiss und die Früchte vor Tier- und Insektenfraß zu schützen, beispielweise durch Vögel, Wespen, Fliegen und dergleichen.

Die FR 3 056 077 A1 zeigt ein Schutzsystem, bei dem eine tunnelartige Plane ausgehend von einem zusammengefalteten Zustand entlang einer Pflanzenreihe und geführt in Schienen herausgezogen und aufgefaltet wird, wobei sich die tunnelartige Plane über eine gesamte Höhe der zu schützenden Pflanzen erstreckt.

Bei dem aus der DE 10 2006 028 273 A1 bekannten Schutzsystem erstreckt sich das abgerollte Schutznetz im Wesentlichen vertikal nach unten, so dass es auch in Kontakt mit Blüten bzw. Fruchtständen bzw. Früchten der Pflanzen kommen kann. Hierdurch besteht die Gefahr, dass durch das Schutznetz unerwünschte Schäden entstehen, die zu Ernteeinbußen führen können. Die der Erfindung zu Grunde liegende Aufgabe wird darin gesehen, ein Schutzsystem der genannten Art derart weiterzuentwickeln, dass ein verbesserter physischer Schutz der Pflanzen und Früchte ermöglicht wird.

Diese Aufgabe wird gelöst durch ein Schutzsystem gemäß Anspruch 1 und ein Nachrüstsystem gemäß Anspruch 12. Vorteilhafte Ausgestaltungen mit zweckmäßigen Weiterbildungen sind in den abhängigen Patentansprüchen angegeben.

Vorgeschlagen wird also ein Schutzsystem für den physischen Schutz von Pflanzen, insbesondere von mehreren in einer Reihe angeordneten Pflanzen, und deren Blüten oder/und Fruchtstände mit wenigstens einem Schutznetz; wenigstens einer Drehwelle; wobei das Schutznetz mit einem ersten (unteren) Netzrandbereich, insbesondere ersten (unteren) Netzkante, an der Drehwelle befestigt ist und mit einem zweiten (oberen) Netzrandbereich, insbesondere zweiten (oberen) Netzkante, an einem Trägerelement befestigt ist, das in einem oberen Bereich der Pflanzen angeordnet und mit wenigstens einer pfahlartigen Stütze verbunden ist, derart, dass das Schutznetz bedarfsweise von oben nach unten von der Drehwelle abrollbar oder von unten nach oben auf die Drehwelle aufrollbar ist. Dabei ist vorgesehen, dass das Schutzsystem mehrere Auslegervorrichtungen aufweist, die an einem ersten, insbesondere äußeren Ende mittelbar mit der Drehwelle in Verbindung stehen und an einem zweiten, insbesondere inneren Ende drehbar an einer jeweiligen pfahlartigen Stütze gelagert sind, derart, dass die Drehwelle beim Ab-/Aufrollen entlang einer bogenförmigen Bahn bewegbar ist.

Mittels der drehbar bzw. beweglich an den Stützen gelagerten Auslegervorrichtungen kann beim Abrollen bzw. Aufrollen des Schutznetzes auf einfache Weise ein ausreichender Abstand des Schutznetzes zu der Pflanze, insbesondere zu deren Fruchtständen bzw. Früchten, ermöglicht werden. Da die Drehwelle entlang einer bogenförmigen, insbesondere im Wesentlichen kreisförmigen, Bahn bewegt wird, kann das Schutznetz, auch wenn es beim Ab-/Aufrollvorgang zwischen der Drehwelle und dem Trägerelement gespannt ist, um die Pflanze bzw. die Früchte herum bewegt werden.

Dabei kann die Länge der Auslegervorrichtungen insbesondere in Abhängigkeit von der zu schützenden Pflanzenart, wie beispielsweise Weinreben, Obstbäume und dergleichen, angepasst werden, um den Abstand zwischen Schutznetz und Pflanze bzw. Frucht passend einzurichten. Bei einer solchen Anpassung des Abstands kann auch die Höhe der Anbringung der Auslegervorrichtung entlang der pfahlartigen Stütze berücksichtigt werden bzw. entsprechend gewählt werden.

Bei dem Schutzsystem ist an dem ersten Ende einer betreffenden Auslegervorrichtung eine Führungshülse angebracht sein, in der die Drehwelle aufgenommen ist, wobei die die Führungshülse über ihre gesamte axiale Länge eine Austrittsöffnung aufweist, durch die sich das Schutznetz hindurch erstreckt. Dabei ist die Drehwelle mit dem daran (zumindest teilweise) aufgewickelten Schutznetz drehbar in der Führungshülse aufgenommen und ermöglicht gleichzeitig das Spannen des Schutznetzes von der Drehwelle zu dem Trägerelement durch die Austrittsöffnung der Führungshülse hindurch.

Bei dem Schutzsystem kann die Austrittsöffnung der Führungshülse derart dimensioniert sein, dass die Drehwelle, insbesondere bei vollständig oder zu mindestens 80% abgerolltem Schutznetz, durch die Austrittsöffnung hindurch in die Führungshülse einführbar, insbesondere einklipsbar ist. Hierdurch ist es möglich, die Führungshülse nachträglich an einer Drehwelle mit Schutznetz anzubringen bzw. die Verbindung zwischen der Führungshülse und der Drehwelle herzustellen. Dabei kann das Einführen der Drehwelle in eine betreffende Führungshülse sehr einfach und insbesondere werkzeuglos erfolgen.

Bei dem Schutzsystem kann die Austrittsöffnung der Führungshülse bezogen auf einen Querschnitt durch die Führungshülse, in Umfangsrichtung eine Dimension von etwa π/6 rad bis π/3 rad aufweisen. Mit anderen Worten bilden zwei gedachte Schenkel, die jeweils den Mittelpunkt der Führungshülse mit einem jeweiligen Rand der Austrittsöffnung verbinden einen Winkel von 30° bis 60°. Hierdurch ist sichergestellt, dass das Schutznetz während der bogenförmigen Bahnbewegung der Drehwelle ungehindert abgerollt bzw. aufgerollt werden kann.

Bei dem Schutzsystem weist die Führungshülse einen konkaven Hülsenabschnitt auf, der die Drehwelle umgibt, außer im Bereich der Austrittsöffnung, wobei sich auf der der Auslegervorrichtung zugewandten Seite der Führungshülse ein konvexer Netzführungsabschnitt an den konkaven Hülsenabschnitt anschließt. Durch den konkaven Hülsenabschnitt ist sichergestellt, dass die Führungshülse trotz der Austrittsöffnung eine ausreichende Führungsfläche aufweist, entlang der sich die Drehwelle abstützen und bewegen, insbesondere gerollt werden kann. Der konvexe Netzführungsabschnitt ermöglicht eine je nach Stellung des Auslegerelements im Wesentlichen tangentiale Berührung und Führung des ab-/aufzurollenden Schutznetzes, so dass dieses entlang des konvexen Netzführungsabschnitts gleiten kann. Hierdurch ist beim Auf-(Abrollen des Schutznetzes auch ein Verhaken oder Verheddern des Schutznetzes an der Führungshülse verhindert.

Bei dem Schutzsystem kann der konvexe Netzführungsabschnitt einen Rand der Austrittsöffnung bilden. Hierdurch ist die Austrittsöffnung für die gleitende Anlage des Schutznetzes eingerichtet, so dass der Ab-/Aufrollvorgang durch die Führungshülse nicht behindert wird.

Bei dem Schutzsystem kann die Drehwelle ein sechskantiges Profil, insbesondere ein sechskantiges Hohlprofil, aufweisen. Durch ein sechskantiges Profil kann die Drehwelle verwindungssteif ausgeführt werden. Die Drehwelle kann entlang ihrer Axialrichtung flexibel ausgeführt sein. Das Sechskantprofil der Drehwelle ermöglicht einerseits eine drehfeste Kopplung mit einer Antriebsvorrichtung, etwa einer manuell bedienbaren Kurbel, an der ein komplementäres Sechskantgegenstück vorgesehen ist, oder einer sonstigen Antriebs- oder Getriebewelle, an der ein komplementäres Sechskantgegenstück vorhanden ist. Ein komplementäres Sechskantgegenstück kann insbesondere in das Sechskant-Hohlprofil der Drehwelle in Axialrichtung eingeführt werden. Das Sechskantprofil ermöglicht andererseits eine gute Rollbarkeit der Drehwelle innerhalb der Führungshülsen.

Bei dem Schutzsystem kann an einem ersten Ende einer betreffenden Auslegervorrichtung ein elektrisch angetriebener Motor befestigt sein, der mit der Drehwelle gekoppelt ist und dazu eingerichtet ist, die Drehwelle in Rotation zu versetzen oder die Drehwelle in einer gewünschten Position zu halten. Wie bereits erwähnt, kann mit dem Motor beispielweise ein Sechskantgegenstück gekoppelt sein, das durch den Motor in Drehbewegung versetzt werden kann, um die Drehbewegung auf die Drehwelle zu übertragen. Das Sechskantgegenstück kann beispielweise Teil einer Antriebs- oder Getriebewelle sein.

Dabei kann der Motor in Axialrichtung mit zwei sich in entgegengesetzte Richtungen erstreckenden Drehwellenabschnitten gekoppelt sein, die gemeinsam die gesamte Drehwelle bilden. In einem solchen Fall kann jeder Drehwellenabschnitt mit einem jeweiligen Sechskantgegenstück verbunden sein.

Der Motor kann beispielweise mittels eines Schneckengetriebes eine Getriebewelle in Drehbewegung versetzen, wobei die Getriebewelle einseitig oder zweiseitig mit der Drehwelle bzw. zwei Drehwellenabschnitten verbunden ist, insbesondere mittels Sechskantgegenstücken.

Bei dem Schutzsystem kann der Motor auf der bogenförmigen Bahn bewegbar sein. Der für das Ab-/Aufrollen des Schutznetzes eingesetzte Motor wird also zusammen mit der Drehwelle auf der bogenförmigen Bahn bewegt. Dabei erfolgt eine Überlagerung der Drehbewegung der Drehwelle um ihre Drehachse und der translatorischen Bewegung der Drehwelle entlang der bogenförmigen Bahn. Die translatorische Bewegung erfolgt dabei insbesondere entlang einer kreisförmigen Bahn, wobei der Mittelpunkt des Kreises durch die drehbare Lagerung bzw. Anlenkung des zweiten Ende der Auslegervorrichtung an der pfahlartigen Stütze gebildet wird.

Das Schutzsystem kann bezogen auf eine Gesamtlänge der Drehwelle wenigstens zwei Auslegervorrichtungen mit jeweiligen Führungshülsen und wenigstens eine Auslegervorrichtung mit Motor aufweisen, wobei der Motor entlang der Drehwelle zwischen zwei Führungshülsen angeordnet ist. Dabei kann der Motor insbesondere im Wesentlichen mittig bzw. mit im Wesentlichen gleichem Abstand zu den beiden Führungshülsen angeordnet sein. Bei einer derartigen Anordnung erstrecken sich, wie bereits oben beschrieben, von dem Motor aus jeweilige Drehwellenabschnitte in entgegengesetzte Richtungen, wobei die beiden Drehwellenabschnitte zusammen die Drehwelle bilden. Jeder Drehwellenabschnitt ist in einer derartigen Anordnung von einer jeweiligen Führungshülse abgestützt. Es sind auch andere Konstellationen denkbar, bei denen beispielweise entlang eines jeweiligen Drehwellenabschnitts zwei oder mehr Führungshülsen angeordnet sind, so dass entlang der gesamten Drehwelle vier oder mehr Führungshülsen vorhanden sind.

In diesem Zusammenhang wird darauf hingewiesen, dass die Anzahl der Auslegervorrichtungen in einem solchen Schutzsystem der Summe aus den verwendeten Führungshülsen und den verwendeten Motoren entspricht, weil pro Auslegervorrichtung eine Führungshülse oder ein Motor vorgesehen ist.

Die Drehwelle des Schutzsystems, gegebenenfalls gebildet durch zwei Drehwellenabschnitte, kann eine Gesamtlänge von 100 Meter oder mehr aufweisen. Mit anderen Worten kann unter Einsatz von einem einzigen Motor entlang einer sehr langen Pflanzenreihe einseitig das Schutznetz bedarfsweise ab-/aufgerollt werden.

Das Schutzsystem kann eine Steuereinheit aufweisen, die dazu eingerichtet ist, den Motor anzusteuern, um das Schutznetz abzurollen oder aufzurollen oder in einer bestimmten Schutzstellung zu halten. Dabei kann die Steuereinheit auch dazu eingerichtet sein, mehrere Motoren gleichzeitig anzusteuern, um mehrere Schutznetze im Wesentlichen synchron auf-/abzurollen.

Nimmt man beispielweise an, dass auf einer Anbaufläche mehrere Reihen von Pflanzen vorhanden sind, wobei jeder Reihe durch das Schutzsystem geschützt werden soll, ist es beispielweise denkbar, dass pro Reihe eine eigene Steuereinheit vorgesehen ist oder dass eine Steuereinheit für mehrere Reihen vorgesehen ist. Ist pro Pflanzenreihe eine Steuereinheit vorgesehen, so kann diese zumindest zwei Motoren ansteuern, die auf jeder Seite der Pflanzenreihe das Ab-/Aufrollen des Schutznetzes antreiben.

Bei dem Schutzsystem kann die Steuereinheit dazu eingerichtet sein, mit einem mobilen Endgerät oder/und mit einer Servereinheit drahtlos zu kommunizieren, derart, dass die Steuereinheit von dem mobilen Endgerät oder/und der Servereinheit Eingabedaten empfängt. Ferner kann die Steuereinheit dazu eingerichtet sein, den Motor in Abhängigkeit von den empfangenen Eingabedaten anzusteuern.

Das mobile Endgerät kann insbesondere ein Smartphone, ein Tabletcomputer oder dergleichen sein, auf dem eine Applikation zum Einstellen des Schutzsystems, insbesondere der Stellung des Schutznetzes, gespeichert ist. Hierdurch kann eine Bedienperson mittels des mobilen Endgeräts das Schutznetz bedarfsweise ab-/aufrollen bzw. in einer gewünschte, zumindest teilweise abgerollte Stellung positionieren.

Alternativ oder ergänzend kann die Steuereinheit mit einer Servereinheit kommunizieren. Dabei kann die Servereinheit eine Cloud-Anwendung oder dergleichen sein. Die von einer Servereinheit empfangenen Eingabedaten können beispielsweise abgeleitet sein von meteorologischen Informationen, wie etwa Warnungen vor Starkregen, Hagelschlag und dergleichen. Dabei können insbesondere auch geografische Informationen über die Position des Schutzsystems mit geografischen Angaben zu meteorologischen Bedingungen verwendet werden. Beispielsweise kann die Steuereinheit dazu eingerichtet sein, das Schutznetz abzurollen und in eine gewünschte Position einzustellen, wenn für das Gebiet, in dem das Schutzsystem steht, eine Warnung vor Starkregen oder/und Hagelschlag ausgegeben wird.

Bei dem Schutzsystem kann die elektrische Energieversorgung des Schutzsystems, insbesondere des Motors und der Steuereinheit, im Bereich der Kleinspannung liegen und bereitgestellt werden durch wenigstens eine photovoltaische Erzeugungseinheit und wenigstens eine elektrische Speichereinheit. Hierdurch kann eine autarke Energieversorgung bereitgestellt werden, ohne dass zusätzliche Stromleitungen mit höherer Spannung genutzt bzw. verlegt werden müssen. Hierdurch wird die Arbeitssicherheit beim Pflegen bzw. Ernten in den Pflanzenreihen, insbesondere auch durch sogenannte Harvester bzw. Vollerntemaschinen, verbessert.

Das Schutzsystem kann entlang einer Reihe von mehreren Pflanzen angeordnet sein, wobei in der Reihe mehrere pfahlartige Stützen angeordnet sind und an jeder pfahlartigen Stütze zwei Auslegervorrichtungen angeordnet sind, derart, dass auf jeder Seite der Reihe ein ab-/aufrollbares Schutznetz angeordnet ist, um die Pflanzen bei zumindest teilweise abgerollten Schutznetzen im Wesentlichen vollständig physisch zu schützen.

Vorgeschlagen wird ferner auch ein Nachrüstset für ein bestehendes Schutzsystem gemäß der oben beschriebenen bekannten Art. Dabei ist vorgesehen, dass das Nachrüstset umfasst:
mehrere Auslegervorrichtungen mit einem ersten Ende und einem zweiten Ende;
mehrere Führungshülsen, die mit dem ersten Ende einer betreffenden Auslegervorrichtung verbindbar oder verbunden sind und in denen die Drehwelle des bestehenden Schutzsystems aufnehmbar ist;
mehrere Verbindungsgelenke, die mit dem zweiten Ende einer betreffenden Auslegervorrichtung verbindbar oder verbunden sind und die mit einer betreffenden pfahlartigen Stütze des bestehenden Schutzsystems verbindbar sind;
wenigstens einen elektrisch angetriebenen Motor, der mit dem ersten Ende eine betreffenden Auslegervorrichtung verbindbar oder verbunden ist und der mit der Drehwelle des bestehenden Schutzsystems verbindbar ist; und
wenigstens eine Steuereinheit, die dazu eingerichtet ist, den Motor anzusteuern.

Ein solches Nachrüstset ermöglicht die Automatisierung eines bestehenden, bis dahin manuell betriebenen Schutzsystems, so dass das bestehende Schutzsystem mit geringem Aufwand für den Einsatz optimiert und verbessert werden kann.

Das Nachrüstset kann ferner eine photovoltaische Erzeugungseinheit und wenigstens eine elektrische Speichereinheit umfassen. Hierdurch kann eine autarke Energieversorgung für das nachgerüstete Schutzsystem bereitgestellt werden, so dass keinerlei elektrische Zuleitungen zu einer betreffenden Pflanzenreihe bzw. Anbaufläche verlegt werden müssen.

Weitere Vorteile und Einzelheiten der Erfindung ergeben sich aus der nachfolgenden Beschreibung von Ausführungsformen unter Bezugnahme auf die Figuren. Dabei zeigt:
- Fig. 1: eine vereinfachte perspektivische Darstellung eines Schutzsystems;
- Fig. 2: eine Draufsicht auf eine Stütze mit Auslegervorrichtung des Schutzsystems;
- Fig. 3: eine Draufsicht auf eine Stütze mit Auslegervorrichtung des Schutzsystems;
- Fig. 4: eine seitliche Draufsicht auf eine Führungshülse;
- Fig. 5: eine Draufsicht von oben auf die Führungshülse;
- Fig. 6: in den Teilfiguren A) bis C) die Führungshülse mit darin aufgenommener Drehwelle und Schutznetz in unterschiedlichen Positionierungen.

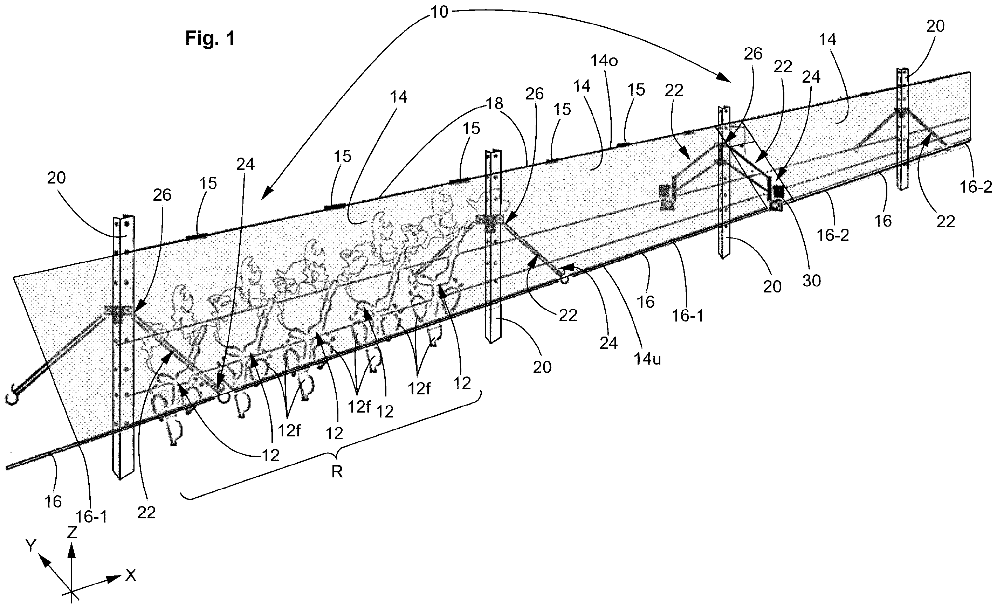

In Fig. 1 ist vereinfacht und schematisch ein Schutzsystem 10 für den physischen Schutz von Pflanzen 12 dargestellt. Beispielhaft sind als Pflanzen 12 vereinfacht Weinstöcke bzw. Reben dargestellt. Ferner sind auch Fruchtstände 12f der Pflanzen ersichtlich. Die Pflanzen 12 sind entlang in einer Reihe R angeordnet. Für die weitere Beschreibung wird die Ausrichtung der Reihe R als X-Richtung (Längsrichtung) angenommen. Zur X-Richtung sind jeweils orthogonal eine Y-Richtung (Breitenrichtung) und eine Z-Richtung (Höhenrichtung) ersichtlich.

Das Schutzsystem 10 umfasst wenigstens ein Schutznetz 14 und wenigstens eine Drehwelle 16. Das Schutznetz 14 ist mit einem ersten (unteren) Netzrandbereich 14u an der Drehwelle 16 befestigt. Ein zweiter (oberer) Netzrandbereich 14o ist an einem Trägerelement 18 befestigt. Das Trägerelement 18 ist in dem gezeigten Beispiel in Höhenrichtung Z oberhalb der Pflanzen 12 angeordnet. Das Trägerelement 18 kann aber auch in einem oberen (Wachstums-)Bereich der Pflanzen 12 angeordnet sein.

Das Trägerelement 18 kann beispielweise ein gespannter Draht oder eine Strebe oder dergleichen sein. Das Trägerelement 18 ist mit wenigstens einer pfahlartigen Stütze 20 verbunden. Im gezeigten Beispiel ist das Trägerelement 18 mit vier Stützen 20 verbunden, wobei die Darstellung lediglich eine beispielhafte Teillänge eines Schutzsystem 10 zeigt.

Das Schutznetz 14 kann mittels Befestigungshilfen 15, die auch als Plaketten bezeichnete werden können, an dem Trägerelement 18, insbesondere Draht, befestigt werden.

Das Schutznetz 14 ist also derart mit dem Trägerelement 18 und der Drehwelle 16 verbunden, dass es bedarfsweise von oben nach unten von der Drehwelle 16 abrollbar oder von unten nach oben auf die Drehwelle 16 aufrollbar ist.

Wie aus der Fig. 1 ersichtlich sind bei dem Schutzsystem 10 mehrere Stützen 20 bzw. Pfähle entlang der Pflanzenreihe R bzw. entlang der Längsrichtung X nacheinander angeordnet. Die Stützen 20 sind mit ihren unteren Enden fest mit dem Boden bzw. Untergrund verbunden, insbesondere mittels nicht dargestellter Fundamente.

Aus der Fig. 1 ist ebenfalls ersichtlich, dass das Schutzsystem 10 mehrere Auslegervorrichtungen 22 aufweist. Die Auslegervorrichtungen 22 stehen jeweils an einem ersten, insbesondere äußeren Ende 24 mittelbar mit der Drehwelle 16 in Verbindung. An einem zweiten, insbesondere inneren Ende 26 sind die Auslegervorrichtungen 22 drehbar an einer jeweiligen pfahlartigen Stütze 20 gelagert. Mittels der Auslegervorrichtungen 22 folgt daher die Drehwelle 16 beim Ab-/Aufrollen des Schutznetzes 14 einer bogenförmigen Bahn.

Wie aus der Fig. 1 ersichtlich, kann das Schutzsystem 10 unterschiedliche ausgebildete Auslegervorrichtungen 22 aufweisen. In Fig. 1 sind rein beispielhaft drei Stützen 20 (von links: erste, zweite und vierte Stütze) mit der einen Auslegervorrichtung 22 und eine Stütze 20 (von links: dritte Stütze) mit der anderen Auslegervorrichtung 22 dargestellt. Die unterschiedlichen Ausgestaltungen der Auslegervorrichtungen 22 werden nachfolgend noch genauer beschrieben wird.

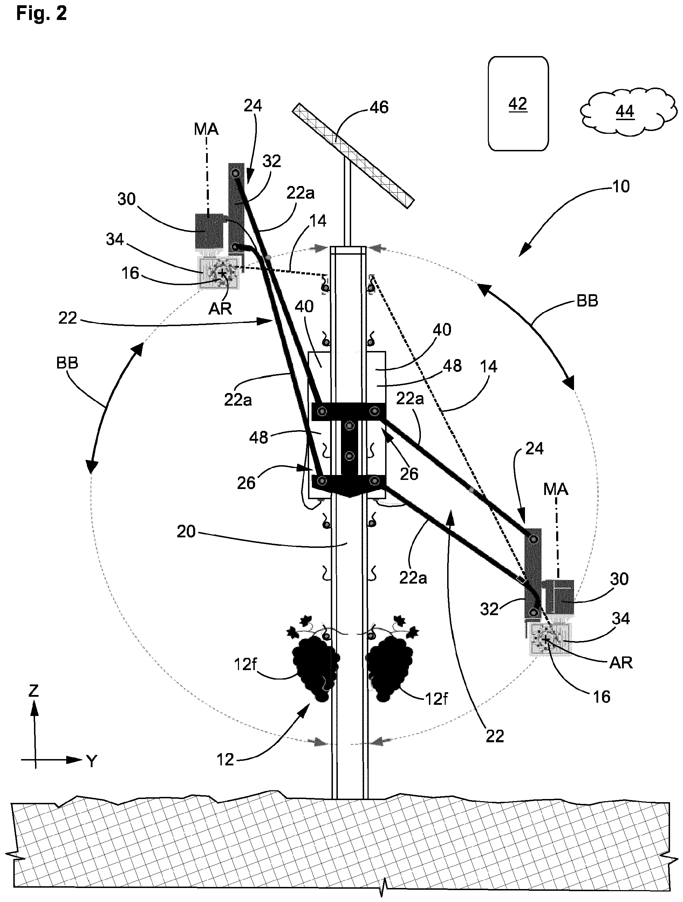

Fig. 2 zeigt eine Draufsicht in X-Richtung auf eine Stütze 20, an der beidseitig eine jeweilige Auslegervorrichtung 22 angebracht ist. Die hier dargestellten Auslegervorrichtungen 22 umfassen jeweils zwei gelenkig bzw. drehbar gelagerte Auslegerarme 22a. An dem ersten Ende 24 der Auslegervorrichtung 22 ist ein elektrisch angetriebener Motor 30 befestigt. Der Motor 30 ist mit der Drehwelle 16 gekoppelt und dazu eingerichtet, die Drehwelle 16 in Rotation zu versetzen oder die Drehwelle 16 in einer gewünschten Position zu halten.

Der Motor 30 ist an einem mit den beiden Auslegerarmen 22a gelenkig verbundenen Strukturbauteil 32, insbesondere einem Vertikalträger, befestigt. An dem Strukturbauteil 32 ist auch eine Getriebevorrichtung 34 angebracht, deren nicht dargestellte Getriebewelle mit der Drehwelle 16 des Schutzsystems 10 gekoppelt ist. Die Getriebevorrichtung 34 kann beispielweise ein Schneckengetriebe aufweisen, so dass eine um eine zur Z-Achse parallele Motordrehachse MA erzeugte Motordrehbewegung in eine hierzu im Wesentlichen orthogonale Drehbewegung der Drehwelle 16 um eine zur X-Richtung im Wesentlichen parallele Abrollachse AR übertragen, insbesondere auch übersetzt, werden kann.

Im Zusammenhang mit dem Motor 30, der als Antrieb für das Ab-/Aufrollen des Schutznetzes 14 dient, wird unter Hinweis auf die Fig. 1 darauf hingewiesen, dass der Motor 30 in Axialrichtung (Abrollachse AR) der Drehwelle 16 mit zwei sich in entgegengesetzte Richtungen erstreckenden Drehwellenabschnitten 16-1, 16-2 gekoppelt sein kann, wobei die beiden Drehwellenabschnitte 16-1, 16-2 gemeinsam die gesamte Drehwelle 16 bilden.

Der Motor 30 kann also zusammen mit der Getriebevorrichtung 34 zwischen zwei Drehwellenabschnitten 16-1, 16-2 angeordnet sein, so dass mittels der Getriebewelle beide Drehwellenabschnitte 16-1, 16-2 in Rotation versetzt werden können. Es ist klar, dass sich die beiden Drehwellenabschnitte 16-1, 16-2 ausgehend von der Position des Motors 30 bzw. der Getriebevorrichtung 34 in entgegengesetzte Richtungen erstrecken, auch wenn sie beide entlang der Längsrichtung (X-Richtung) verlaufen.

Aus der Fig. 2 ist ferner ersichtlich, dass aufgrund der Drehbewegung der Drehwelle 16 und deren gelenkiger Verbindung mit der Stütze 20 mittels der Auslegervorrichtung 22 der Motor 30 und auch die Drehwelle 16 auf einer bogenförmigen Bahn BB bewegbar sind, was durch die durchgezogenen Doppelpfeile und die helleren, gestrichelten Linien veranschaulicht ist.

Ferner ist in Fig. 2 auch das Schutznetz 14 ersichtlich, wobei es auf der rechten Seite stärker abgerollt ist als auf der rechten Seite der Stütze 20. Das auf der rechten Seite dargestellte Schutznetz 14 kann in der dargestellten Position beispielweise einen Schutz gegen Starkregel oder Hagelschlag bilden. Auf der linken Seite der Stütze 20 ist das Schutznetz 14 in einer im Wesentlichen vollständig aufgerollten Position gezeigt.

Wie aus der Fig. 2 ersichtlich, kann das Schutznetz 14 bzw. die Drehwelle 16 entlang der bogenförmigen Bahn BB an jeder gewünschten Position eingestellt werden. Bezogen auf die dargestellte Position auf der rechten Seite, kann das Schutznetz 14 noch weitere abgerollt werden, wobei der Motor 30 und die Drehwelle 16 weiter nach unten und näher zu der Pflanze 12 bzw. den Fruchtständen 12f bzw. der Stütz 20 bewegt werden. Oder das Schutznetz 14 kann wieder aufgerollt werden, wobei der Motor 30 und die Drehwelle 16 nach oben und weiter weg von der Pflanze 12 bzw. den Fruchtständen 12f bzw. der Stütze 20 bewegt werden bevor wieder eine Annäherung an die Stütze 20 erfolgt beim Erreichen der oberen Endposition, wie sie auf der linken Seite der Stütze 20 illustriert ist.

Aus der Fig. 2 ist ferner ersichtlich, dass das Schutzsystem 10 eine Steuereinheit 40 aufweist, die dazu eingerichtet ist, den Motor 30 oder auch mehrere Motoren 30 anzusteuern, um das Schutznetz 14 abzurollen oder aufzurollen oder in einer bestimmten Schutzstellung zu halten.

Die Steuereinheit 40 kann beispielsweise an derjenigen Stütze 20 befestigt sein, an der die Auslegervorrichtung 22 mit Motor 30 angebracht ist.

Die Steuereinheit 40 kann dazu eingerichtet sein, mit einem mobilen Endgerät 42 oder/und mit einer Servereinheit 44 drahtlos zu kommunizieren, derart, dass die Steuereinheit 40 von dem mobilen Endgerät 42 oder/und der Servereinheit 44 Eingabedaten empfängt. Die Steuereinheit 40 kann weiter dazu eingerichtet sein, den Motor 30 in Abhängigkeit von den empfangenen Eingabedaten anzusteuern.

Bei dem Schutzsystem 10 kann die elektrische Energieversorgung, insbesondere des Motors 30 und der Steuereinheit 40, im Bereich der Kleinspannung liegen und bereitgestellt werden durch wenigstens eine photovoltaische Erzeugungseinheit 46 und wenigstens eine elektrische Speichereinheit 48. Im gezeigten Beispiel sind die Steuereinheit 40 und die Speichereinheit 48 vereinfacht durch das gleiche Zeichenelement dargestellt. Es wird darauf hingewiesen, dass die Steuereinheit 40 und die Speichereinheit 48 in Realität getrennt voneinander in gesonderten Gehäusen bereitgestellt werden können. Es ist aber auch denkbar, dass die Steuereinheit 40 und die Speichereinheit 48 in einem gemeinsamen Gehäuse untergebracht sind.

Die photovoltaische Erzeugungseinheit 46 kann beispielweise auf einer Stütze 20 oder benachbart zu dieser angebracht sein.

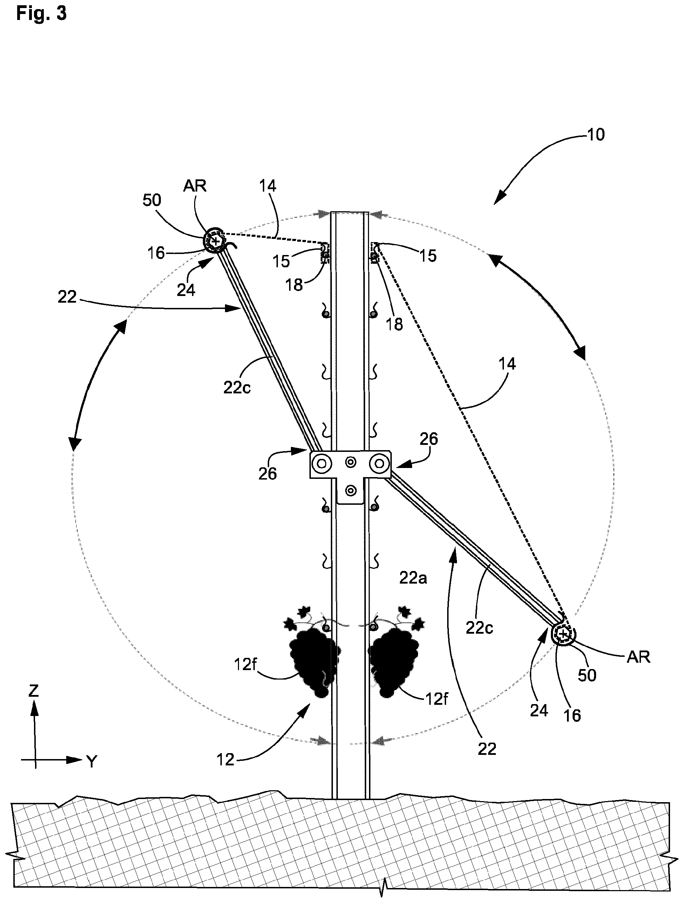

Fig. 3 zeigt eine Draufsicht in X-Richtung auf eine Stütze 20, an der beidseitig eine jeweilige Auslegervorrichtung 22 angebracht ist. Die hier dargestellten Auslegervorrichtungen 22 umfassen jeweils einen gelenkig bzw. drehbar gelagerten Auslegerarm 22c. An dem ersten Ende 24 der Auslegervorrichtung 22 ist eine Führungshülse 50 befestigt. In der Führungshülse 50 ist die Drehwelle 16 (inklusive daran aufgerolltem Schutznetz 14) beweglich, insbesondere drehbar aufgenommen. Mit anderen Worten kann die vom Motor 30 (Fig. 2) angetriebene Drehwelle 16 in der Führungshülse 50 gedreht werden, wobei das Schutznetz 14 ab-/aufgerollt werden kann.

Es wird darauf hingewiesen, dass die Auslegervorrichtung 22 der Fig. 2 und die Auslegervorrichtung 22 der Fig. 3 jeweils so ausgestaltet bzw. dimensioniert sind, dass die von der Drehwelle 16 beim Ab-/Aufrollen des Schutznetzes 14 beschriebene bogenförmige Bahn BB im Bereich einer jeweiligen Stütz 20 im Wesentlichen gleich ist.

In der Fig. 3 ist ferner noch das Trägerelement 18 ersichtlich, das hier als gespannte Draht ausgeführt ist. Ferner sind auch rein schematisch die Befestigungshilfen 15 für die Anbringung des zweiten (oberen) Netzrandbereichs illustriert, die entlang des Trägerelements 18 an verschiedenen Stellen angeordnet sind (siehe Fig. 1).

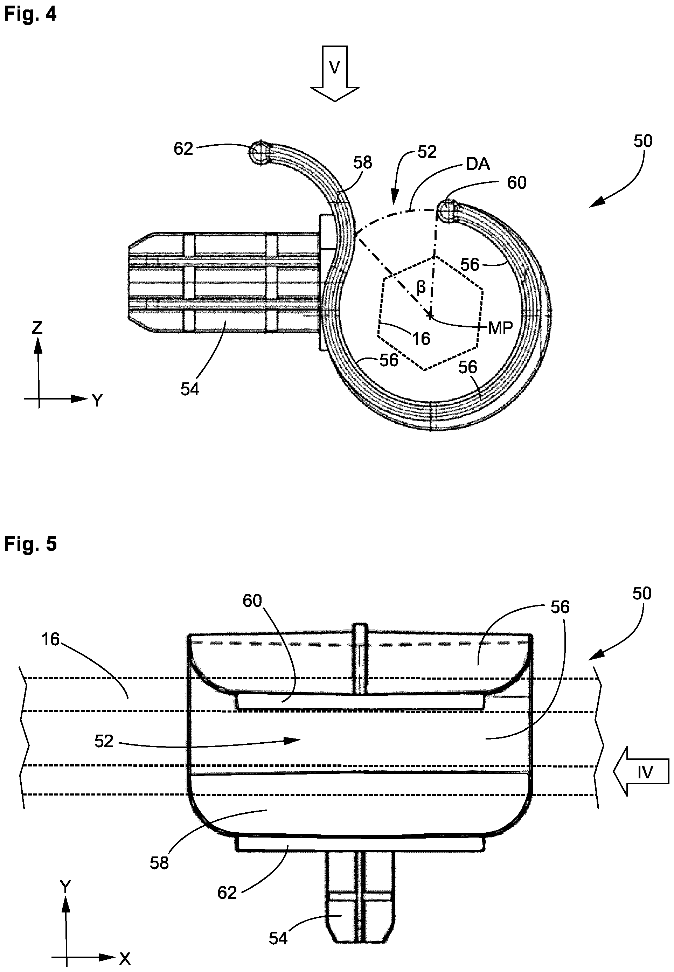

Nachfolgend wird unter gleichzeitiger Bezugnahme auf die Fig. 4 und 5 die Führungshülse 50 genauer beschrieben. Dabei zeigt Fig. 4 eine seitliche Draufsicht auf die Führungshülse 50 in X-Richtung, was auch im Wesentlichen einer Axialrichtung AH der Führungshülse entspricht, also etwa entsprechend dem Konturpfeil IV in Fig. 5. Fig. 5 zeigt eine Draufsicht von oben (Z-Richtung) auf die Führungshülse 50, etwa entsprechend dem Konturpfeil V der Fig. 4.

Die Führungshülse 50 weist eine Austrittsöffnung 52 auf, durch die sich das Schutznetz (in den Fig. 4 und 5 nicht dargestellt) hindurch erstrecken kann. Die Austrittsöffnung 52 erstreckt sich dabei in X-Richtung über die gesamte axiale Länge der Führungshülse 50, was insbesondere aus der Fig. 5 ersichtlich ist.

Die Führungshülse 50 umfasst ein Kopplungsstück 54, das mit dem Auslegerarm 22c (Fig. 3) bzw. dessen äußerem Ende 24 verbunden werden kann. Insbesondere kann das Kopplungsstück 54 in den Auslegerarm 22c eingeführt werden.

Die Führungshülse 50 weist einen konkaven Hülsenabschnitt 56 auf, der die in Fig. 4 und 5 gestrichelt angedeutete Drehwelle 16 umgibt, außer im Bereich der Austrittsöffnung 52. Auf der dem Kopplungsstück 54 bzw. im montierten Zustand der Auslegervorrichtung 22 zugewandten Seite weist die Führungshülse 50 einen konvexen Netzführungsabschnitt 58 auf, der sich an den konkaven Hülsenabschnitt 56 anschließt bzw. in diesen übergeht. Der konvexe Netzführungsabschnitt 58 bildet dabei insbesondere einen Rand bzw. eine Begrenzung der Austrittsöffnung 52.

Die Austrittsöffnung 52 der Führungshülse 50 ist derart dimensioniert ist, dass die Drehwelle 16, insbesondere bei vollständig oder zu mindestens 80% abgerolltem Schutznetz, durch die Austrittsöffnung 52 hindurch in die Führungshülse 50 einführbar, insbesondere einklipsbar ist.

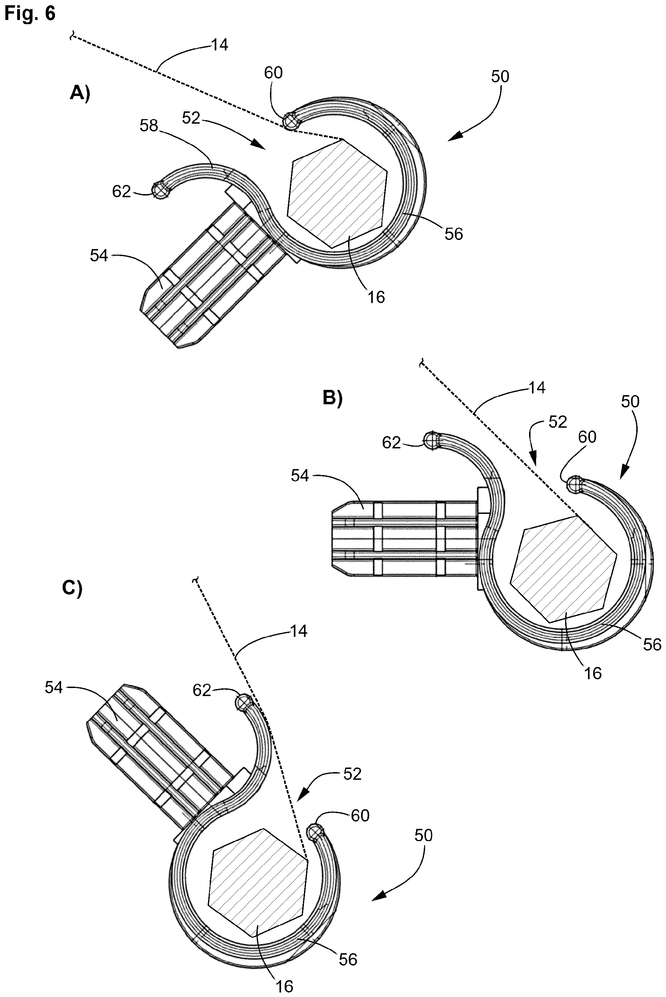

Die Austrittsöffnung 52 weist bezogen auf einen Querschnitt durch die Führungshülse 50, in Umfangsrichtung eine Dimension von etwa π/6 rad bis π/3 rad aufweist, was in Fig. 4 durch die strichpunktierte Linie DA dargestellt ist. Mit anderen Worten bilden zwei gedachte Schenkel, die jeweils den Mittelpunkt MP der Führungshülse 50 mit einem jeweiligen Rand bzw. einer jeweiligen Begrenzung der Austrittsöffnung 52 verbinden einen Winkel β von 30° bis 60°. Hierdurch ist sichergestellt, dass das Schutznetz während der bogenförmigen Bahnbewegung der Drehwelle ungehindert abgerollt bzw. aufgerollt werden kann. Dies wird nachfolgend unter Bezugnahme auf die Fig. 6 noch genauer beschrieben.

Der konkave Hülsenabschnitt 56 weist entlang der Austrittsöffnung 52 einen wulstartigen Führungsrand 60 auf, der das Schutznetz bei Berührung führt, ohne an diesem einen Schaden zu verursachen. In ähnlicher Weise weist der konvexe Netzführungsabschnitt 58 einen von der Austrittsöffnung 52 abgewandten wulstartigen Führungsrand 62 auf, der das Schutznetz bei Berührung führt, ohne an diesem einen Schaden zu verursachen.

Die Führungshülse 50 kann im Bereich des konkaven Hülsenabschnitts 56 einen Innendurchmesser von etwa 30mm bis 60mm, insbesondere 40mm aufweisen.

In Fig. 6 ist die Führungshülse 50 zusammen mit der Drehwelle 16 und dem durch die Austrittsöffnung 52 hindurch geführten Schutznetz 14 in unterschiedlichen Positionen dargestellt, die auftreten können, wenn die Drehwelle 16 entlang der bogenförmigen Bahn BB (Fig. 2 und 3) bewegt wird. Die gezeigten Relationen von Drehwelle 16 und Schutzenetz14 zu der Führungshülse sind dabei rein qualitativ eingezeichnet, um unterschiedliche Konstellationen beschreiben zu können.

In Fig. 6A ist die Führungshülse 50 mittels des Auslegerarms 22c (Fig. 3) schräg nach oben ausgerichtet. Das Schutznetz 14 ist zu einem überwiegenden Teil auf die Drehwelle 16 aufgerollt. In einer solchen Position kann das Schutznetz 14, das sich durch die Austrittsöffnung 52 erstreckt, mit dem wulstartigen Führungsrand 60 des konkaven Hülsenabschnitts 56 in Kontakt kommen. Dabei kann das Schutznetz 14 beim Auf-/Abrollen entlang des Führungsrandes 60 vorbeigleiten, ohne dass es beschädigt wird.

In Fig. 6B ist die Führungshülse 50 mittels des Auslegerarms 22c (Fig. 3) im Wesentlichen horizontal positioniert. Das Schutznetz 14 ist etwa zur Hälfte von der Drehwelle 16 abgerollt. In einer solchen Position kann das Schutznetz 14 ohne weitere Berührung durch die Austrittsöffnung 52 hindurch gespannt sein.

In Fig. 6C ist die Führungshülse 50 mittels des Auslegerarms 22c (Fig. 3) schräg nach unten ausgerichtet. Das Schutznetz 14 ist zu einem überwiegenden Teil von der Drehwelle 16 abgerollt. In einer solchen Position kann das Schutznetz 14, das sich durch die Austrittsöffnung 52 erstreckt, mit dem konvexen Netzführungsabschnitt 58 oder/und dem wulstartigen Führungsrand 62 in Kontakt kommen. Dabei kann das Schutznetz 14 beim Auf-/Abrollen entlang des konvexen Netzführungsabschnitts 58 bzw. des Führungsrandes 62 vorbeigleiten, ohne dass es beschädigt wird.

Die in den Fig. 2 bis 6 gezeigte Drehwelle 16 weist ein sechskantiges Profil auf. Hierdurch wird eine hohe Verwindungssteifigkeit der Drehwelle 16 ermöglicht. Es wird darauf hingewiesen, dass auch andere Geometrien für das Profil der Drehwelle 16 in Betracht kommen können, wie beispielweise kreisförmig oder achteckig oder dergleichen.

Das oben beschriebene Schutzsystem 10 kann entlang einer Reihe R von mehreren Pflanzen 12 angeordnet sein (Fig. 1), wobei in der Reihe R mehrere pfahlartige Stützen 20 angeordnet sind und an jeder pfahlartigen Stütze 20 zwei Auslegervorrichtungen 22 (Fig. 2 und 3) angeordnet sind, derart, dass auf jeder Seite der Reihe R ein auf-/abrollbares Schutznetz 14 angeordnet ist, um die Pflanzen 12 bei zumindest teilweise abgerollten Schutznetzen 14 im Wesentlichen vollständig physisch zu schützen.

## Patentansprüche

1. Schutzsystem (10) für den physischen Schutz von Pflanzen (12), insbesondere von mehreren in einer Reihe (R) angeordneten Pflanzen (12), und deren Blüten oder/und Fruchtstände (12f) mit wenigstens einem Schutznetz (14);
wenigstens einer Drehwelle (16);
wobei das Schutznetz (14) mit einem ersten Netzrandbereich (14u), insbesondere erste Netzkante, an der Drehwelle (16) befestigt ist und mit einem zweiten Netzrandbereich (14o), insbesondere zweite Netzkante, an einem Trägerelement (18) befestigt ist, das in einem oberen Bereich oder oberhalb der Pflanzen (12) angeordnet und mit wenigstens einer pfahlartigen Stütze (20) verbunden ist,
derart, dass das Schutznetz (14) bedarfsweise von oben nach unten von der Drehwelle (16) abrollbar oder von unten nach oben auf die Drehwelle (16) aufrollbar ist,
**dadurch gekennzeichnet, dass** das Schutzsystem (10) mehrere Auslegervorrichtungen (22) aufweist, die an einem ersten, insbesondere äußeren Ende (24) mittelbar mit der Drehwelle (16) in Verbindung stehen und an einem zweiten, insbesondere inneren Ende (26) drehbar an einer jeweiligen pfahlartigen Stütze (20) gelagert sind, derart, dass die Drehwelle (16) beim Ab-/Aufrollen entlang einer bogenförmigen Bahn (BB) bewegbar ist,
dass an dem ersten Ende (24) einer betreffenden Auslegervorrichtung (22) eine Führungshülse (50) angebracht ist, in der die Drehwelle (16) aufgenommen ist, wobei die Führungshülse (50) über ihre gesamte axiale Länge eine Austrittsöffnung (52) aufweist, durch die sich das Schutznetz (14) hindurch erstreckt, und
dass die Führungshülse (50) einen konkaven Hülsenabschnitt (56) aufweist, der die Drehwelle (16) umgibt, außer im Bereich der Austrittsöffnung (52), wobei sich auf der der Auslegervorrichtung (22) zugewandten Seite der Führungshülse (50) ein konvexer Netzführungsabschnitt (58) an den konkaven Hülsenabschnitt (56) anschließt.

2. Schutzsystem (10) nach Anspruch 1, **dadurch gekennzeichnet, dass** die Austrittsöffnung (52) derart dimensioniert ist, dass die Drehwelle (16), insbesondere bei vollständig oder zu mindestens 80% abgerolltem Schutznetz, durch die Austrittsöffnung (52) hindurch in die Führungshülse (50) einführbar, insbesondere einklipsbar ist.

3. Schutzsystem (10) nach Anspruch 1 oder 2, **dadurch gekennzeichnet, dass** die Austrittsöffnung (52) bezogen auf einen Querschnitt durch die Führungshülse (50), in Umfangsrichtung eine Dimension von etwa π/6 rad bis π/3 rad aufweist.

4. Schutzsystem (10) nach einem der vorhergehenden Ansprüche,
**dadurch gekennzeichnet, dass** der konvexe Netzführungsabschnitt (58) einen Rand der Austrittsöffnung (52) bildet.

5. Schutzsystem (10) nach einem der vorhergehenden Ansprüche,
**dadurch gekennzeichnet, dass** die Drehwelle (16) ein sechskantiges Profil aufweist.

6. Schutzsystem (10) nach einem der vorhergehenden Ansprüche,
**dadurch gekennzeichnet, dass** an einem ersten Ende (24) einer betreffenden Auslegervorrichtung (20) ein elektrisch angetriebener Motor (30) befestigt ist, der mit der Drehwelle (16) gekoppelt ist und dazu eingerichtet ist, die Drehwelle (16) in Rotation zu versetzen oder die Drehwelle (16) in einer gewünschten Position zu halten, wobei insbesondere der Motor (30) in Axialrichtung (AR) der Drehwelle (16) mit zwei sich in entgegengesetzte Richtungen erstreckenden Drehwellenabschnitten (16-1, 16-2) gekoppelt ist, die gemeinsam die gesamte Drehwelle (16) bilden.

7. Schutzsystem (10) nach Anspruch 6, **dadurch gekennzeichnet, dass** der Motor (30) auf der bogenförmigen Bahn (BB) bewegbar ist.

8. Schutzsystem (10) nach einem der Ansprüche 1 bis 5 und nach einem der Ansprüche 6 bis 7, **dadurch gekennzeichnet, dass** es bezogen auf eine Gesamtlänge der Drehwelle (16) wenigstens zwei Auslegervorrichtungen (22) mit jeweiligen Führungshülsen (50) und wenigstens eine Auslegervorrichtung (20) mit Motor (30) aufweist, wobei der Motor (30) entlang der Drehwelle (16) zwischen zwei Führungshülsen (50) angeordnet ist.

9. Schutzsystem (10) nach einem der Ansprüche 6 bis 8, **dadurch gekennzeichnet, dass** es eine Steuereinheit (40) aufweist, die dazu eingerichtet ist, den Motor (30) anzusteuern, um das Schutznetz (14) abzurollen oder aufzurollen oder in einer bestimmten Schutzstellung zu halten, wobei insbesondere die Steuereinheit (40) dazu eingerichtet ist mit einem mobilen Endgerät (42) oder/und mit einer Servereinheit (44) drahtlos zu kommunizieren, derart, dass die Steuereinheit (40) von dem mobilen Endgerät (42) oder/und der Servereinheit (44) Eingabedaten empfängt, und die Steuereinheit (40) weiter dazu eingerichtet ist, den Motor (30) in Abhängigkeit von den empfangenen Eingabedaten anzusteuern.

10. Schutzsystem (10) nach einem der Ansprüche 6 bis 9, **dadurch gekennzeichnet, dass** die elektrische Energieversorgung des Schutzsystems (10), insbesondere des Motors (30) und der Steuereinheit (40), im Bereich der Kleinspannung liegt und bereitgestellt ist durch wenigstens eine photovoltaische Erzeugungseinheit (46) und wenigstens eine elektrische Speichereinheit (48).

11. Schutzsystem (10) nach einem der vorhergehenden Ansprüche,
**dadurch gekennzeichnet, dass** es entlang einer Reihe (R) von mehreren Pflanzen (12) angeordnet ist, wobei in der Reihe (R) mehrere pfahlartige Stützen (20) angeordnet sind und an jeder pfahlartigen Stütze (20) zwei Auslegervorrichtungen (22) angeordnet sind, derart, dass auf jeder Seite der Reihe (R) ein auf-/abrollbares Schutznetz (14) angeordnet ist, um die Pflanzen (12) bei zumindest teilweise abgerollten Schutznetzen (14) im Wesentlichen vollständig physisch zu schützen.

12. Nachrüstset für ein bestehendes Schutzsystem gemäß dem Oberbegriff von Anspruch 1, **dadurch gekennzeichnet, dass** das Nachrüstset umfasst:
mehrere Auslegervorrichtungen (22) mit einem ersten Ende (24) und einem zweiten Ende (26);
mehrere Führungshülsen (50), die mit dem ersten Ende (24) einer betreffenden Auslegervorrichtung (22) verbindbar oder verbunden sind und in denen die Drehwelle (16) des bestehenden Schutzsystems aufnehmbar ist, wobei die Führungshülse (50) einen konkaven Hülsenabschnitt (56) aufweist, der die Drehwelle (16) umgibt, außer im Bereich einer Austrittsöffnung (52), wobei sich auf der der Auslegervorrichtung (22) zugewandten Seite der Führungshülse (50) ein konvexer Netzführungsabschnitt (58) an den konkaven Hülsenabschnitt (56) anschließt;
mehrere Verbindungsgelenke, die mit dem zweiten Ende (26) einer betreffenden Auslegervorrichtung (22) verbindbar oder verbunden sind und die mit einer betreffenden pfahlartigen Stütze (20) des bestehenden Schutzsystems verbindbar sind;
wenigstens einen elektrisch angetriebenen Motor (30), der mit dem ersten Ende (24) einer betreffenden Auslegervorrichtung (22) verbindbar oder verbunden ist und der mit der Drehwelle (16) des bestehenden Schutzsystems verbindbar ist; und
wenigstens eine Steuereinheit (40), die dazu eingerichtet ist, den Motor anzusteuern.

13. Nachrüstset gemäß Anspruch 12, **dadurch gekennzeichnet, dass** es eine photovoltaische Erzeugungseinheit (46) und wenigstens eine elektrische Speichereinheit (48) umfasst.

## Claims

1. A protection system (10) for the physical protection of plants (12), in particular of a plurality of plants (12) arranged in a row (R), and their flowers and/or fruiting heads (12f), comprising
at least one protective net (14);
at least one rotary shaft (16);
wherein the protective net (14) is fastened to the rotary shaft (16) with a first net edge region (14u), in particular a first net edge, and is fastened to a carrier element (18) with a second net edge region (14o), in particular a second net edge, which carrier element (18) is arranged in an upper region or above the plants (12) and is connected to at least one pole-like support (20),
such that the protective net (14) can be unrolled from the rotary shaft (16) from top to bottom or can be rolled up onto the rotary shaft (16) from bottom to top as required,
**characterized in that** the protection system (10) has a plurality of boom devices (22) which are indirectly connected to the rotary shaft (16) at a first, in particular outer, end (24) and are rotatably mounted on a respective pole-like support (20) at a second, in particular inner, end (26), such that the rotary shaft (16) can be moved along an arcuate path (BB) during unrolling/rolling up,
**in that** a guide sleeve (50) is attached to the first end (24) of a respective boom device (22), in which guide sleeve (50) the rotary shaft (16) is received, wherein the guide sleeve (50) has an outlet opening (52) over its entire axial length, through which outlet opening (52) the protective net (14) extends, and
**in that** the guide sleeve (50) has a concave sleeve portion (56) which surrounds the rotary shaft (16), except in the region of the outlet opening (52), wherein a convex net guide portion (58) adjoins the concave sleeve portion (56) on that side of the guide sleeve (50) which faces the boom device (22).

2. The protection system (10) according to claim 1, **characterized in that** the outlet opening (52) is dimensioned such that the rotary shaft (16) can be inserted, in particular clipped, into the guide sleeve (50) through the outlet opening (52), in particular when the protective net is completely or at least 80% unrolled.

3. The protection system (10) according to claim 1 or 2, **characterized in that** the outlet opening (52), in relation to a cross section through the guide sleeve (50), has a dimension of approximately π/6 rad to π/3 rad in the circumferential direction.

4. The protection system (10) according to any one of the preceding claims, **characterized in that** the convex net guide portion (58) forms an edge of the outlet opening (52).

5. The protection system (10) according to any one of the preceding claims, **characterized in that** the rotary shaft (16) has a hexagonal profile.

6. The protection system (10) according to any one of the preceding claims, **characterized in that** an electrically driven motor (30) is fastened to a first end (24) of a respective boom device (20), which motor (30) is coupled to the rotary shaft (16) and is configured to set the rotary shaft (16) in rotation or to hold the rotary shaft (16) in a desired position, wherein in particular the motor (30) is coupled in the axial direction (AR) of the rotary shaft (16) to two rotary shaft portions (16-1, 16-2) which extend in opposite directions and which jointly form the entire rotary shaft (16).

7. The protection system (10) according to claim 6, **characterized in that** the motor (30) can be moved on the arcuate path (BB).

8. The protection system (10) according to any one of claims 1 to 5 and according to any one of claims 6 to 7, **characterized in that**, in relation to an overall length of the rotary shaft (16), it has at least two boom devices (22) with respective guide sleeves (50) and at least one boom device (20) with a motor (30), wherein the motor (30) is arranged along the rotary shaft (16) between two guide sleeves (50).

9. The protection system (10) according to any one of claims 6 to 8, **characterized in that** it has a control unit (40) which is configured to control the motor (30) in order to unroll or roll up the protective net (14) or to hold it in a specific protective position, wherein in particular the control unit (40) is configured to communicate wirelessly with a mobile terminal (42) or/and with a server unit (44), such that the control unit (40) receives input data from the mobile terminal (42) and/or the server unit (44), and the control unit (40) is further configured to control the motor (30) as a function of the received input data.

10. The protection system (10) according to any one of claims 6 to 9, **characterized in that** the electrical energy supply of the protection system (10), in particular of the motor (30) and of the control unit (40), lies in the extra-low voltage region and is provided by at least one photovoltaic generating unit (46) and at least one electrical storage unit (48).

11. The protection system (10) according to any one of the preceding claims, **characterized in that** it is arranged along a row (R) of a plurality of plants (12), wherein a plurality of pole-like supports (20) is arranged in the row (R) and two boom devices (22) are arranged on each pole-like support (20), such that a protective net (14) which can be rolled up/unrolled is arranged on each side of the row (R), in order to provide substantially complete physical protection to the plants (12) when the protective nets (14) are at least partially unrolled.

12. A retrofit kit for an existing protection system according to the preamble of claim 1, **characterized in that** the retrofit kit comprises:
a plurality of boom devices (22) with a first end (24) and a second end (26);
a plurality of guide sleeves (50) which can be connected or are connected to the first end (24) of a respective boom device (22) and in which the rotary shaft (16) of the existing protection system can be received, wherein the guide sleeve (50) has a concave sleeve portion (56) which surrounds the rotary shaft (16), except in the region of an outlet opening (52), wherein a convex net guide portion (58) adjoins the concave sleeve portion (56) on that side of the guide sleeve (50) which faces the boom device (22);
a plurality of connecting joints which can be connected or are connected to the second end (26) of a respective boom device (22) and which can be connected to a respective pole-like support (20) of the existing protection system;
at least one electrically driven motor (30) which can be connected or is connected to the first end (24) of a respective boom device (22) and which can be connected to the rotary shaft (16) of the existing protection system; and
at least one control unit (40) which is configured to control the motor.

13. The retrofit kit according to claim 12, **characterized in that** it comprises a photovoltaic generating unit (46) and at least one electrical storage unit (48).

## Revendications

1. Système de protection (10) pour la protection physique de plantes (12), en particulier de plusieurs plantes (12) disposées en rangée (R), et de leurs fleurs et/ou de leurs infrutescences (12f) comprenant
au moins un filet de protection (14) ;
au moins un arbre de rotation (16) ;
dans lequel le filet de protection (14) est fixé avec une première zone de bordure de filet (14u), en particulier un premier bord de filet, sur l'arbre de rotation (16) et est fixé avec une deuxième zone de bordure de filet (14o), en particulier un deuxième bord de filet, sur un élément porteur (18) qui est disposé dans une zone supérieure ou au-dessus des plantes (12) et est relié à au moins un support (20) de type poteau,
de telle manière que le filet de protection (14) puisse en cas de besoin être déroulé de haut en bas de l'arbre de rotation (16) ou être enroulé de bas en haut sur l'arbre de rotation (16),
**caractérisé en ce que** le système de protection (10) présente plusieurs dispositifs de bras (22), qui sont reliés indirectement à l'arbre de rotation (16) à une première extrémité, en particulier extérieure (24), et qui sont montés de manière tourner sur un support de type poteau (20) respectif à une deuxième extrémité (26), en particulier intérieure, de telle manière que l'arbre de rotation (16) puisse être déplacé le long d'une piste en forme d'arc (BB) lors du déroulement/de l'enroulement,
qu'une douille de guidage (50), dans laquelle est logé l'arbre de rotation (16), est installée sur la première extrémité (24) d'un dispositif de bras (22) concerné, dans lequel la douille de guidage (50) présente sur toute sa longueur axiale une ouverture de sortie (52), à travers laquelle s'étend le filet de protection (14), et que la douille de guidage (50) présente une section de douille concave (56), qui entoure l'arbre de rotation (16), sauf dans la zone de l'ouverture de sortie (52), dans lequel une section de guidage de filet convexe (58) se raccorde à la section de douille concave (56) sur le côté de la douille de guidage (50) tourné vers le dispositif de bras (22).

2. Système de protection (10) selon la revendication 1, **caractérisé en ce que** l'ouverture de sortie (52) est dimensionnée de telle manière que l'arbre de rotation (16), en particulier lorsque le filet de protection est entièrement ou à au moins 80 % déroulé, puisse être introduit, en particulier clipsé, à travers l'ouverture de sortie (52) dans la douille de guidage (50).

3. Système de protection (10) selon la revendication 1 ou 2, **caractérisé en ce que** l'ouverture de sortie (52) présente une dimension d'environ π/6 rad à π/3 rad par rapport à une section transversale à travers la douille de guidage (50) dans la direction périphérique.

4. Système de protection (10) selon l'une des revendications précédentes, **caractérisé en ce que** la section convexe de guidage de réseau (58) forme un bord de l'ouverture de sortie (52).

5. Système de protection (10) selon l'une des revendications précédentes, **caractérisé en ce que** l'arbre de rotation (16) présente un profil hexagonal.

6. Système de protection (10) selon l'une des revendications précédentes, **caractérisé en ce qu'**est fixé sur une première extrémité (24) d'un dispositif de bras (20) concerné un moteur (30) à entraînement électrique, qui est couplé à l'arbre de rotation (16) et est mis au point pour amener l'arbre de rotation (16) en rotation ou pour maintenir l'arbre de rotation (16) dans une position souhaitée, dans lequel en particulier le moteur (30) est couplé, dans la direction axiale (AR) de l'arbre de rotation (16), à deux sections d'arbre de rotation (16-1, 16-2) s'étendant dans des directions opposées, qui forment ensemble la totalité de l'arbre de rotation (16).

7. Système de protection (10) selon la revendication 6, **caractérisé en ce que** le moteur (30) peut être déplacé sur la piste en forme d'arc (BB).

8. Système de protection (10) selon l'une des revendications 1 à 5 et selon l'une des revendications 6 à 7, **caractérisé en ce qu'**il présente, par rapport à une longueur totale de l'arbre de rotation (16), au moins deux dispositifs de bras (22) avec des douilles de guidage (50) respectives et présente au moins un dispositif de bras (20) avec un moteur (30), dans lequel le moteur (30) est disposé le long de l'arbre de rotation (16) entre deux douilles de guidage (50).

9. Système de protection (10) selon l'une des revendications 6 à 8, **caractérisé en ce qu'**il présente une unité de commande (40), qui est mise au point pour piloter le moteur (30) pour dérouler ou enrouler le filet de protection (14) ou le maintenir dans une position de protection donnée, dans lequel en particulier l'unité de commande (40) est mise au point pour communiquer sans fil avec un terminal mobile (42) et/ou avec une unité de serveur (44) de telle manière que l'unité de commande (40) reçoive du terminal mobile (42) ou/et l'unité de serveur (44) des données d'entrée, et l'unité de commande (40) est en outre mise au point pour piloter le moteur (30) en fonction des données d'entrée reçues.

10. Système de protection (10) selon l'une des revendications 6 à 9, **caractérisé en ce que** l'alimentation en énergie électrique du système de protection (10), en particulier du moteur (30) et de l'unité de commande (40), se situe dans la plage de la basse tension et est mise à disposition par au moins une unité de production photovoltaïque (46) et au moins une unité de stockage électrique (48).

11. Système de protection (10) selon l'une des revendications précédentes, **caractérisé en ce qu'**il est disposé le long d'une rangée (R) de plusieurs plantes (12), dans lequel dans la rangée (R) sont disposés plusieurs supports (20) de type poteau et deux dispositifs de bras (22) sont disposés sur chaque support (20) de type poteau de telle manière qu'un filet de protection (14) pouvant être enroulé/déroulé soit disposé sur chaque côté de la rangée (R) pour protéger physiquement sensiblement totalement les plantes (12) lorsque les filets de protection (14) sont au moins en partie déroulés.

12. Kit d'équipement ultérieur d'un système de protection existant selon le préambule de la revendication 1, **caractérisé en ce que** le kit d'équipement ultérieur comprend :
plusieurs dispositifs de bras (22) comprenant une première extrémité (24) et une deuxième extrémité (26) ;
plusieurs douilles de guidage (50) qui peuvent être reliées ou sont reliées à la première extrémité (24) d'un dispositif de bras (22) concerné et dans lesquelles l'arbre de rotation (16) du système de protection existant peut être logé, dans lequel la douille de guidage (50) présente une section de douille concave (56) qui entoure l'arbre de rotation (16), sauf dans la zone d'une ouverture de sortie (52), dans lequel une section de guidage de filet convexe (58) se raccorde du côté de la douille de guidage (50) tourné vers le dispositif de bras (22) à la section de douille concave (56) ; plusieurs articulations de liaison, qui peuvent être reliées ou sont reliées à la deuxième extrémité (26) d'un dispositif de bras (22) concerné et qui peuvent être reliées à un support (20) de type poteau concerné du système de protection existant ;
au moins un moteur (30) à entraînement électrique, qui peut être relié ou est relié à la première extrémité (24) d'un dispositif de bras (22) concerné et qui peut être relié à l'arbre de rotation (16) du système de protection existant ; et
au moins une unité de commande (40) qui est mise au point pour piloter le moteur.

13. Kit d'équipement ultérieur selon la revendication 12, **caractérisé en ce qu'**il comprend une unité de production photovoltaïque (46) et au moins une unité de stockage électrique (48).
